Europäisches Patentamt

European Patent Office

Office européen des brevets

(11) Numéro de publication: **0 047 682**
**B1**

(12) **FASCICULE DE BREVET EUROPEEN**

(45) Date de publication du fascicule du brevet: **17.04.85**

(51) Int. Cl.⁴: **C 03 B 29/04,** G 05 D 23/27

(21) Numéro de dépôt: **81401255.5**

(22) Date de dépôt: **04.08.81**

(54) **Procédé et dispositif pour la régulation de la température d'une feuille de verre dans un four à plusieurs cellules.**

(30) Priorité: **06.08.80 FR 8017345**

(43) Date de publication de la demande:
**17.03.82 Bulletin 82/11**

(45) Mention de la délivrance du brevet:
**17.04.85 Bulletin 85/16**

(84) Etats contractants désignés:
**BE DE GB IT LU NL**

(56) Documents cités:
**US-A-3 764 789**

(73) Titulaire: **SAINT-GOBAIN VITRAGE**
**Les Miroirs 18, avenue d'Alsace**
**F-92400 Courbevoie (FR)**
(84) **BE GB IT LU NL**

(73) Titulaire: **VEGLA Vereinigte Glaswerke GmbH**
**Viktoria Allee 3-5**
**D-5100 Aachen (DE)**
(84) **DE**

(72) Inventeur: **Bartusel, Karl Rudolf**
**An der Waldmeisterhütte 8**
**D-5120 Stolberg (DE)**
Inventeur: **Roth, Mario**
**Laurentiusstrasse no 13**
**D-5100 Aachen (DE)**
Inventeur: **Schamberg, Walter**
**Hahnstrasse 11**
**D-5120 Herzogenrath (DE)**
Inventeur: **Willems, Josef**
**Kellersbergerstrasse 6**
**D-5110 Alsdorf Hoengen (DE)**

(74) Mandataire: **Eudes, Marcel et al**
**Saint-Gobain Recherche 39 Quai Lucien Lefranc**
**F-93304 Aubervilliers Cedex (FR)**

Courier Press, Leamington Spa, England.

EP 0 047 682 B1

## Description

L'invention concerne un procédé de régulation de la température d'une feuille de verre dans un four constitué de plusieurs cellules successives, à l'intérieur duquel cette feuille, placée verticalement, est acheminée d'une cellule à la suivante à une cadence déterminée, la puissance de chauffage des organes chauffants de chaque cellule étant réglée à un niveau fixé selon un programme préétabli par un régulateur de puissance commandé par des organes sensibles à la température de la paroi de chaque cellule. Ces caractéristiques font partie de l'état de la technique (voir notamment FR—A—794398).

Pour tremper des volumes de verre, généralement et de façon connue, on les suspend par des pinces auto-serrantes, à un chariot mobile sur un rail placé au-dessus d'un four dit "traversant" où, acheminées par avances successives, elles sont chauffées à la température nécessaire. Un bombage peut être effectué avant la trempe. Ce procédé est d'usage courant pour la fabrication de vitrages de véhicules automobiles.

Aussi bien pour la trempe que pour la bombage, la température de la feuille de verre doit être réglée avec précision si l'on veut obtenir des produits de caractéristiques constantes.

Pour ce faire, on a développé différents systèmes de régulation, dans le out d'obtenir la meilleure constance possible de la température de la feuille de verre à la sortie du four.

Il est, par exemple, connu de munir les organes de chauffage électrique de thermo-couples qui agissent sur un régulateur de puissance pour maintenir constante la température de ces organes, donc celle du four (brevets FR 794 398, DE AS 1 106 039) ou même de chauffer chaque cellule, voire chaque zone d'une même cellule suivant des programmes différents (DE OS 2 837 985).

On a aussi proposé la régulation de fours à plusieurs cellules avec avance discontinue de feuilles de verre suspendues à des chariots porteurs, de régler la température des éléments chauffants à une valeur déterminée et d'utiliser la mesure de la température de la feuille de verre à la sortie du four pour corriger ce réglage (USP 3 744 985).

Suivant un autre procédé, on alimente chaque cellule à puissance électrique constante et, si la température de four s'écarte d'une valeur de référence, on corrige en conséquence la cadence d'acheminement des feuilles de verre dans le four (DE AS 1 596 382).

Il est également connu, quoique dans un four cù les feuilles de verre sont acheminées de manière continue en position horizontale, de mesurer leur température à la sortie du four au moyen d'un pyromètre optique et de régler leur vitesse d'avance dans le four en fonction des écarts constatés à la sortie par rapport à la valeur désirée (DE OS 2 746 301). Dans ce procédé, la commande la régulation est assurée par un micro-processeur.

D'autre part, l'utilisation d'unités de thyristors pour le réglage de la puissance est également classique et décrite par exemple dans le brevet DD PS 78 780.

Beaucoup de ces systèmes connus travaillent de manière satisfaisante dans un fabrication de série où des feuilles de verre de même dimension, même masse, sont acheminées dans le four à un rythme constant, Il s'établit alors un équilibre approximatif du bilan énergétique du four.

La structure massive des fours de type courant leur confère en effet une bonne isolation et une forte inertie thermique, qui a pour conséquence un bonne stabilité du chauffage, peu sensible aux perturbations extérieures; en revanche, ces fours ne sont pas à même de rééquilibrer de manière satisfaisante des perturbations rapides des conditions de fonctionnement.

Sous l'influence du système de régulation, leur température moyenne oscille légèrement mais à une fréquence notablement inférieure à la cadence d'avance des feuilles de verre. Il en résulte que même lorsque les mesures de température sont effectuées à l'intérieur de four les modifications de température n'affectent pas les feuilles en cours de traitement, mais se font sentir seulement sensiblement plus tard.

Des difficultés particulières de régulation se présentent donc en cas de perturbation de l'équilibre énergétique, liées par exemple à des incidents dans le rythme d'avance des chariots, c'est-à-dire la régularité d'avance des feuilles de verre. Il peut arriver également qu'un ou plusieurs volumes se décrochent et tombent, si bien que le chariot transporteur, dans son cycle, traverse le four à vide ou avec un nombre de feuilles de verre plus faible que prévu.

Si une telle lacune apparaît dans le système de transport, il n'est donc pas possible de régler le puissance du chauffage dans les cellules du four de manière que la feuille de verre qui suit immédiatement soit chauffée à la température convenable. En générale, il sort plusieurs feuilles de verre défectueses avant que le four n'ait retrouvé son équilibre.

A l'inverse, les fours à faible inertie thermique permettent une réponse plus rapide mais sont sensibles aux perturbations extérieures, ils ne conviennent donc pas.

L'invention a pour objet de perfectionner le fonctionnement des fours traversants destinés au traitement de feuilles de verre afin de limiter le plus possible les rebuts de fabrication en cas de variation de la cadence du système de transport et/ou de lacunes imprévues dans le nombre de feuilles acheminées par les chariots transporteurs. En particulier, en cas d'absence d'un volume dans le système de transport, le réglage de puissance réagira de telle manière que la feuille de verre qui suit immédiatement cette lacune présente à la sortie du four la température souhaitée.

Selon une première caractéristique de l'invention, on contrôle la présence de la feuille de verre en synchronisme avec l'avance pas à pas, en amont de l'une au moins des cellules du four, et l'on corrige la régulation de la puissance électrique des cellules suivantes en fonction du signal ainsi obtenu.

Il en résulte un réglage par anticipation dans lequel la puissance apportée à une cellule est déterminée avant que cette feuille ne s'y trouve. Ceci a notamment pour conséquence que, en l'absence accidentelle d'une feuille de verre, la puissance électrique fournie à la cellule est abaissée avant que le chariot transporteur vide n'y arrive en y créant un déséquilibre de température.

Le procédé suivant l'invention peut être mis en oeuvre en contrôlant avec un palpeur ou une barrière optique à réflexion si, au moment prévu par le programme de marche, une feuille de verre est sur le point de pénétrer dans la cellule.

Selon un seconde caractéristique, non seulement entre deux cellules on s'assure de la présence de la feuille de verre, mais on mesure sa température au moyen d'un pyromètre à rayonnement et, en régime normal on règle la puissance de chauffage dans les cellules suivantes en fonction de la température mesurée.

De manière avantageuse, et pour éliminer l'influence des parois du four sur la mesure effectuée par le pyromètre, on utilise pour cette mesure de la température de la feuille de verre un pyromètre optique à plage de mesure relativement étroite dirigé vers une ouverture dans la paroi opposée du four.

On peut également affiner le procédé en employant simultanément plusieurs pyromètres optiques placés en regard de zones superposées de chaque cellule pour y régler la puissance de chauffage par secteurs correspondant à la position des pyromètres.

Un perfectionnement du procédé suivant l'invention consiste à mesurer la température de la feuille de verre après sa sortie du four au moyen d'un pyromètre optique et à incorporer également cette mesure dans la régulation de la puissance de chauffage dans les cellules du four.

Il est particulièrement avantageux d'introduire tous les signaux ou valeurs de mesures provenant des différents organes de mesure dans un microprocesseur qui régule les différents secteurs ou cellules du four en fonction d'un programme préétabli et compte-tenu des données introduites.

Le procédé selon l'invention conduit à de très bons résultats si l'on utilise pour construire le four des éléments chauffants à réponse rapide ainsi que des matériaux isolants à faible inertie thermique. On peut, en particulier, employer avec succès des modules de chauffage vendus dans le commerce sous la dénomination FIBROTHAL (marque déposée), qui sont constitués essentiellement de fibres céramiques d'un poids spécifique d'environ 200 kg/m³ possédant une surface active dans laquelle sont incorporés totalement ou partiellement des éléments chauffants et dont la partie isolante ne pèse qu'une fraction du poids des isolants habituels. Il en résulte une très faible inertie thermique qui entraîne des temps de chauffage et de refroidissement très réduits. De tels éléments chauffants avec une isolation de faible masse spécifique et de fort pouvoir isolant sont donc particulièrement adaptés à la construction de fours de trempe régulés par le procédé suivant l'invention. Les organes chauffants n'ont pas besoin d'être incorporés dans la masse isolante et peuvent être au contraire suspendus à un support approprié en avant du corps isolant.

L'invention propose également un dispositif pour la mise en oeuvre du procédé, ce dispositif renfermant plusieurs cellules successives, ayant des moyens de transport pour acheminer les feuilles de verre pas à pas d'une cellule à l'autre à une cadence prédéterminée et enregistrée sur un programme, ayant également dans chaque cellule des organes de chauffage dont le fonctionnement est déterminé par des régulateurs de la puissance de chauffage asservis aux signaux de mesure de température émis par des thermocouples placés dans les diverses cellules en face desdits organes de chauffage, et étant caractérisé en ce qu'au moins un pyromètre optique est placé en amont d'au moins une cellule, dans l'intervalle qui la sépare de la cellule précédente, en regard d'une ouverture dans une paroi du four, ce pyromètre optique étant relié au régulateur de la puissance de chauffage de chaque cellule en aval par l'intermédiaire d'un compteur associé à un registre à mémoire puis d'un régulateur proportionnel qui commande une action proportionnelle aux signaux émis par les thermocouples si la présence d'une feuille de verre est vérifiée par le compteur et le régistre à mémoire à l'instant prévu par le programme préétabli.

L'invention sera maintenant décrite plus en détail en référence aux figures jointes qui représentent:

*Figure 1:* une couple longitudinale schématique, par le plan médian, d'un four à trois cellules, avec grossissement d'un détail,

*Figure 2:* un schéma des points de contrôle et de mesure ainsi que le traitement des valeurs de mesure selon le procédé de régulation objet de l'invention,

*Figure 3:* une représentation schématique du circuit complet de réglage dans le procédé suivant l'invention.

Bien que l'exemple décrit soit relatif à un four à trois cellules, il va de soi que le procédé peut s'appliquer également à des fours ayant plus ou moins de trois cellules. Dans les grosses installations de production, les fours utilisés présentent en règle générale cinq, six cellules ou même plus. Le procédé est naturellement applicable sur ces fours où il présente les mêmes avantages.

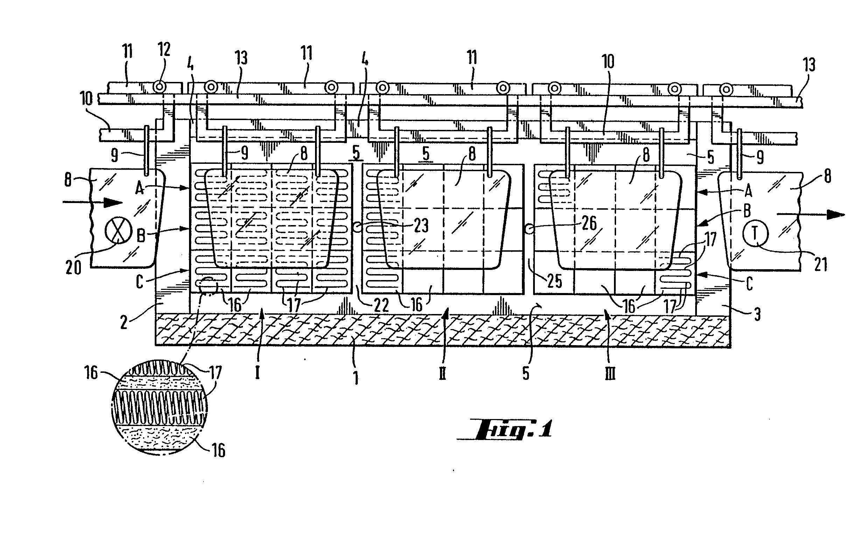

La figure 1 représente les parties essentielles d'un four à trois cellules, en coupe longitudinale suivant le plan médian vertical. Le four comprend une sole 1 constituée de matériau isolant, des éléments de paroi 2 à l'entrée du four et 3 à sa sortie qui ménagent entre eux des fentes verticales, des éléments de voûte 4 qui laissent également libre une fente, ceci pour permettre le transport et le pasage des feuilles et des parois latérales 5. Les feuilles de verre 8 sont suspendues à des pinces d'accrochage 9 qui sont elle-mêmes fixées à des cadres verticaux 10 disposés à la partie inférieure des chariots 11 montés sur des roulettes 12. Ces chariots, mobiles sur un rail de transport 13 placé au-dessus du four dans le sens longitudinal, sont acheminés par un mécanisme non représenté, en une suit ininterrompue suivant une cadence prédéterminée, et, avec eux, les feuilles de verre 8.

Le four représenté comporte trois cellules I, II, III. Chaque cellule est, en fonctionnement normal, occupée par une feuille de verre.

Les parois latérales des cellules sont constituées d'un ensemble d'éléments de paroi 16 formés de plaques d'un matériau isolant en fibres céramiques agglomérées.

Des organes chauffants, constitués de résistances 17, sont incorporés dans la masse isolante, sur la face interne de celle-ci, vers l'intérieur du four; ils cèdent leur énergie par rayonnement. La paroi de chaque cellule est divisée en trois zones superposées A, B et C qui s'étendent sur toute la longueur de la cellule, ce qui permet un réglage par zone dans une même cellule.

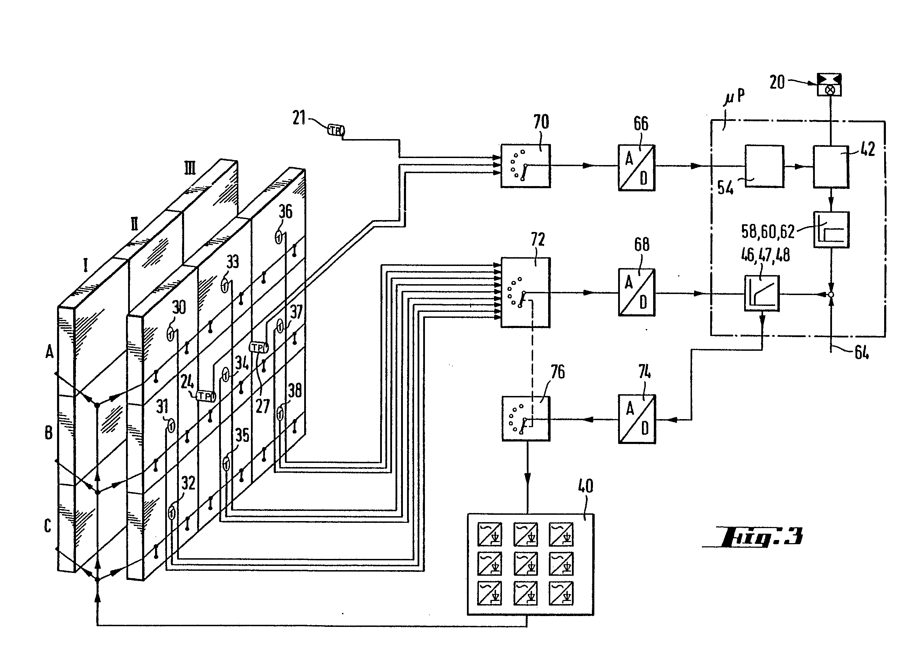

Avant l'entrée du four est disposée une barrière optique 20 et après la sortie du four, est placé un pyromètre optique à rayonnement 21. Entre les cellules I et II se trouve une zone intermédiaire 22 non chauffée dans laquelle une ouverture 23 a été ménagée à travers la paroi du four. En face de cette ouverture 23, et de l'autre côté du four, se trouve un pyromètre à rayonnement 24 (figure 3) dont la plage de mesure est placée en regard de l'ouverture 23 si bien que la mesure de température n'est pas influencée par le rayonnement de la paroi du four.

De la même manière, dans la zone intermédiaire 25 non chauffée entre les cellules II et III, une ouverture 26 a été prévue à travers la paroi du four. En face de cette ouverture, de l'autre côté du four, se trouve un pyromètre 27 dont la plage de mesure est en face de l'ouverture 26.

Le pyromètre à rayonnement 24 constate si, lors de l'avance pas à pas du dispositif transporteur, unee feuille de verre a bien été transportée de la cellule I à la cellule II et mesure en même temps sa température au moment du passage dans la cellule II. De la même manière, le pyromètre à rayonnement 27 constate si un chariot passant de la cellule II à la cellule III porte bien une feuille de verre dont il mesure la température au moment où elle est introduite dans la cellule III.

Chaque zone A, B et C de chaque cellule I, II et III, ainsi qu'il est représenté schématiquement figure 3, est munie de thermocouples 30 à 38 placés de telle manière que la soudure de chaque thermocouple est placée devant la surface rayonnante des éléments chauffants et près de celle-ci. Les thermo-couples 30 à 38 donnent une mesure instantanée de la température des résistances chauffantes dans chaque zone des cellules du four.

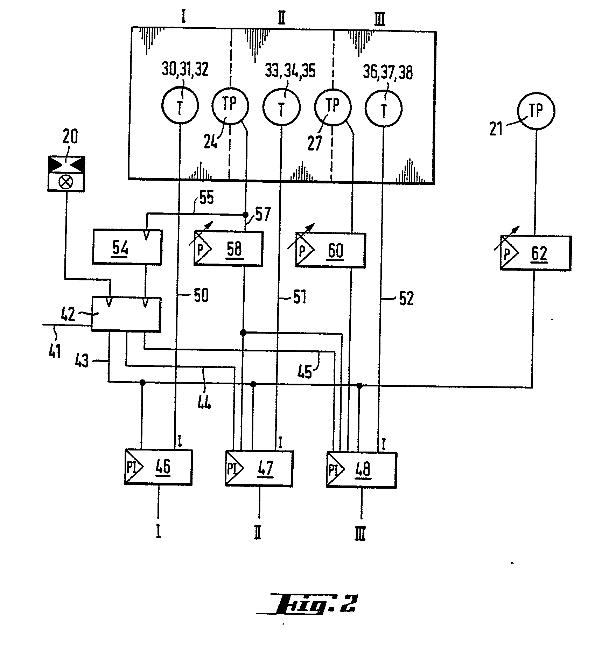

Toutes les valeurs mesurées par les instruments de mesure, à savoir le signal provenant de la barrière optique 20, les valeurs de températures fournies par les pyromètres 24, 27, 21 et les valeurs de températures fournies par les thermo-couples 30 à 38 sont introduites dans un micro-processeur qui, à partir de ces données, assure la régulation des différentes zones de chauffage des cellules en fonction d'un programme préétabli; la puissance électrique est fournie à chaque zone à travers une commande à thyristors 40 (figure 3). Le microprocesseur utilisé pour la régulation peut être d'un type courant par exemple le type CP 80 de la société AEG, les types S5 et 150 de la société SIEMENS ou le type TSX 80 de la société TELE-MECANIQUE de sorte qu'un description détaillée des composants de ce microprocesseur n'est pas nécessaire; il suffit de donner le fonctionnement du dispositif de régulation sous forme d'une description des diverses fonctions conformément aux figures 2 et 3.

Tout d'abord, selon la figure 2, sera défini le principe de l'interaction des diverses grandeurs de mesure et de régulation. La connexion 41 transmet au registre à mémoire 42 la cadence qui a été fixée pour l'avance des chariots transporteurs. S'y inscrivent parallèlement les signaux de vérification émis par la barrière optique à réflexion 20 lorsqu'une feuille vient dans la zone de détection de la barrière lors de l'avance pas à pas des chariots transporteurs.

Le registre à mémoire 42 vérifie si, à l'instant prévu par le programme, une feuille de verre se trouve bien à l'entrée du four. Progressant dans le registre, le signal correspondant est transmis par les connexions 43, 44, 45 aux régulateurs proportionnels — intégraux 46, 47, 48 où il est mis en action de la manière suivante:

Si à l'instant programmé, la barrière optique n'a pas détecté la présence d'une feuille de verre, le niveau de la puissance électrique apportée aux cellules I, II et III à travers les régulateurs 46, 47 et 48 est abaissé à une valeur fixée par le programme. La diminution de puissance dans chaque cellule n'a cependant pas lieu immédiatement mais avec un retard qui correspond au temps mis par le chariot pour atteindre cette cellule à partir du franchissement de la barrière optique.

Si au contraire la barrière optique 20 détecte une feuille de verre devant l'entrée du four, les régulateurs 46, 47 et 48 sont mis en action par l'intermédiaire des connexions 43, 44 et 45 de manière à fournir normalement, au moment voulu, l'énergie nécessaire dans chaque cellule pour réaliser un programme de chauffage normal.

Les thermo-couples 30, 31 et 32 dans la cellule I pilotent directement par l'intermédiaire de la connexion 50 le régulateur 46 qui agit sur les éléments chauffants de la cellule I. De la même manière les thermocouples 33, 34, 35 agissent directement, par la connexion 51, sur le régulateur 47 qui règle la puissance fournie aux éléments chauffants de la cellule II et les thermocouples 36, 37, 38, par la connexion 52, sur le régulateur 48 qui fournit la puissance aux éléments chauffants de la cellule III.

Pour simplifier la description, un seul régulateur 46, 47 et 48 a été montré pour chaque cellule; il va de soi que, si l'on y règle séparément les zones A, B et C, il faudra dans chaque cellule et dans chaque zone un régulateur séparé.

Le signal en provenance du pyromètre 24 est amené d'une part, par la connexion 55, au compteur 54 et d'autre part, par la connexion 57, au régulateur proportionnel 58. Dans le compteur 54 sont dénombrés les signaux de présence des volumes. Les valeurs affichées sur chacun des régulateurs 46, 47 et 48 sont déterminées en fonction de l'état du compteur, l'interposition du registre 42 permettant de détecter l'absence de feuille de verre et de faire progresser et de transmettre les signaux en concordance avec la cadence du four. La mesure du pyromètre 24 transmise à travers le régulateur proportionnel 58 provoque une intervention proportionnelle dans les cellules II et III par l'intermédiaire des régulateurs 47 et 48.

Le pyromètre à rayonnement 21 placé immédiatement devant la station de trempe, c'est-à-dire le cas échéant après la station de bombage, est un élément de réglage global. Il mesure encore une fois la température à cet endroit critique et agit à travers le régulateur proportionnel 62 sur chacun des régulateurs 46, 47 et 48 des trois cellules.

L'imbrication des divers éléments de mesure et de réglage est également montrée schématiquement sur la figure 3. On voit que le compteur 54, le registre 42, les régulateurs proportionnels 58, 60, 62 et les régulateurs proportionnels intégraux 46, 47, 48 sont des éléments du microprocesseur qui en tant que tel peut être commandé manuellement par la connexion 64 ou automatiquement par la barrière optique 20, les thermocouples 30 à 38 et les pyromètres à rayonnement 24, 27 et 21.

Comme les valeurs de mesure sont des mesures analogiques et que le microprocesseur au contraire ne peut traiter que des valeurs numériques, on lui a adjoint des convertisseurs analogiques numériques 66, 60. Comme toutes les valeurs ne peuvent être exploitées en même temps, on a ajouté au convertisseur 66 un connecteur cyclique 70 qui recueille tour à tour et dans l'ordre voulu les mesures des pyromètres à rayonnement. Parallèlement, au convertisseur 68, est adjoint un connecteur cyclique 72 qui recueille périodiquement et dans l'ordre voulu les mesures de chaque thermocouple.

Par les régulateurs proportionnels intégraux 46, 47, 48 à travers le convertisseur numérique analogique 74 et le connecteur cyclique 76 sont commandés les régulateurs à thyristors groupés sous la référence 40 qui alimentent chacune des zones de chauffage A, B, C des trois cellules I, II, III en y réglant individuellement la puissance de chauffage.

**Revendications**

1. Procédé de régulation de la température d'une feuille de verre dans un four comportant plusieurs cellules successives, à l'intérieur duquel cette feuille, placée verticalement, est acheminée à une cadence déterminée, de cellule en cellule, pour être rechauffée à la température de bombage et/ou de trempe, tandis que la puissance de chauffage dans chaque cellule est réglée à un niveau fixé, selon un programme préétabli, en fonction de la température de paroi de cette cellule, caractérisé en ce que l'on contrôle la présence de la feuille de verre en synchronisme avec l'avance pas à pas en amont de l'une au moins des cellules du four le signal ainsi obtenu servant à corriger la régulation de la puissance fournis aux cellules suivantes.

2. Procédé selon la revendication 1, caractérisé par l'emploi d'un four à réponse thermique rapide doté d'éléments de chauffage à réponse rapide et de matériaux isolants à pouvoir isolant élevé et à faible inertie thermique.

3. Procédé selon la revendication 2, caractérisé par l'emploi d'éléments de chauffage incorporés totalement ou partiellement dans la surface d'une plaque isolante constituée essentiellement de fibres céramiques d'un poids spécifique d'environ 200 kg/m$^3$.

4. Procédé selon la revendications 2 ou 3, caractérisé en ce que la présence de la feuille de verre est contrôlée avant l'entrée dans la première cellule du four.

5. Procédé selon la revendications 2 à 4, caractérisé en ce que la présence de la feuille de verre est contrôlée dans une zone séparant deux cellules du four.

6. Procédé selon la revendication 5, caractérisé en ce que l'on effectue le contrôle à partir de la mesure de la température de la feuille de verre, effectuée au moyen d'un pyromètre à rayonnement et utilisée d'autre part pour régler la puissance de chauffage des cellules suivantes.

7. Procédé selon la revendication 6, caractérisé par l'emploi d'un pyromètre à rayonnement à plage de mesure relativement étroite, placé en regard d'une ouverture dans la paroi opposée du four.

8. Procédé selon l'une des revendications 5 à 7, caractérisé en ce que la présence de la feuille de verre est contrôlée au moins dans la partie intermédiaire entre la première et la deuxième cellule avec mesure éventuelle de sa température.

9. Procédé selon l'une des revendications 6 à 8, caractérisé en ce que la température de la feuille de verre est mesurée en plusieurs zones verticalement superposées par plusieurs pyromètres à rayonnement disposés les uns au-dessus des autres et que la puissance de chauffage dans les cellules suivantes est réglée séparément, par zones correspondant à la position des pyromètres, en fonction des températures mesurées.

10. Procédé selon ou plusieurs des revendications de 1 à 9, caractérisé en ce que la régulation de puissance dans les cellules situées en aval de celle suivant l'instrument de mesure est assurée par l'intermédiaire d'un registre à mémoire provoquant dans la régulation un retard correspondant au temps mis par la feuille de verre pour atteindre cette cellule.

11. Procédé selon l'une des revendications 1 à 10, caractérisé en ce que les impulsions données par les instruments de mesure sont comparées avec les signaux théoriques de cadence du four, le programme de chauffage de toutes les cellules étant modifié en cas de décalage de la cadence réelle, par exemple en cas de défaillance du dispositif de transport.

12. Procédé selon l'une des revendications 1 à 11, caractérisé en ce qu'à la sortie du four, la température de la feuille de verre est à nouveau mesurée par un pyromètre à rayonnement, cette mesure servant de paramètre pour la régulation globale de la puissance de chauffage du four.

13. Procédé selon la revendication 12, caractérisé en ce que la feuille de verre étant trempée après bombage à la sortie du four, sa température est mesurée avant l'entrée dans le poste de trempe c'est à dire après le bombage.

14. Procédé selon l'une des revendications 1 à 13, caractérisé en ce que les signaux fournis par les divers instruments de mesure sont introduits dans un microprocesseur programmé pour le chauffage du four.

15. Procédé selon la revendication 14, caractérisé en ce que le programme de réglage de la température tient compte du passage cumulé des feuilles de verre, la puissance inscrite au moment du démarrage du four étant plus élevée qu'en marche normale pour compenser les pertes de chaleur au contact des pièces froides.

16. Dispositif pour la mise en oeuvre du procédé selon l'une des revendications précédentes sur un four traversant vertical renfermant plusieurs cellules (I, II ou III ...) successives, ayant des moyens de transport (9, 10, 11, 12, 13) pour acheminer les feuilles de verre (8) pas à pas d'une cellule (I, II, ou III ...) à l'autre à une cadence prédéterminée et enregistrée sur un programme, ayant également dans chaque cellule des organes de chauffage (17) dont le fonctionnement est déterminé par des régulateurs de puissance de chauffage (47, 48) asservis aux signaux de mesure de température émis par des thermocouples (30 ... 38) placés dans les diverses cellules (I, II, III ...) en face desdits organes de chauffage (17), caractérisé en ce qu'au moins un pyromètre optique (24, 27) est placé en amont d'au moins une cellule (II, III ...), dans l'invervalle qui la sépare de la cellule précédente (I, II ...), en regard d'une ouverture (23, 26) dans une paroi du four, ce pyromètre optique (24, 27) étant relié au régulateur de puissance de chauffage (47, 48) de chaque cellule (II, III ...) en aval par l'intermédiaire d'un compteur (54) associé à un registre à mémoire (42) puis d'un régulateur proportionnel (58) commandant une action proportionnelle aux signaux émis par les thermocouples (30 ... 38) si la présence d'une feuille de verre (8) est vérifiée par le compteur (54) et le registre à mémoire (42) à l'instant prévu par le programme préétabli.

**Patentansprüche**

1. Verfahren zur Steuerung der Temperatur einer Glasscheibe in einem mit mehreren aufeinanderfolgenden Kammern versehenen Ofen, in dessen Innerem die vertikal angeordnete Scheibe zum Zwecke der Erwärmung auf Biege- und/oder Vorspanntemperatur in einem bestimmten Takt von Kammer zu Kammer gefördert wird, wobei die Heizleistung in jeder Kammer auf ein durch ein vorgegebenes Programm bestimmtes festes Niveau in Abhängigkeit von der Wandtemperatur dieser Kammer eingeregelt wird, dadurch gekennzeichnet, daß das Vorhandensein der Glasscheibe synchron mit dem taktweisen Fördern vor mindestens einer Ofenkammer kontrolliert wird und das auf diese Weise erhaltene Signal zur Korrektur der Regelung der Heizleistung der folgenden Kammern verwendet wird.

2. Verfahren nach Anspruch 1, gekennzeichnet durch Verwendung eines thermisch schnell ansprechenden Ofens, der mit schnell ansprechenden Heizelementen bestückt und mit Isoliermaterialien mit hohem Isoliervermögen und geringem Wärmeleitwiderstand versehen ist.

3. Verfahren nach Anspruch 2, dadurch gekennzeichnet, daß Heizelemente verwendet werden, welche vollständig oder teilweise in der Oberfläche einer Isolierplatte eingebettet sind, welche im wesentlichen aus keramischen Fasern mit einem spezifischen Gewicht von etwa 200 kg/m³ gebildet sind.

4. Verfahren nach Anspruch 2 oder 3, dadurch gekennzeichnet, daß das Vorhandensein der Glasscheibe vor Eintritt in die erste Ofenkammer kontrolliert wird.

5. Verfahren nach einem der Ansprüche 2 bis 4, dadurch gekennzeichnet, daß das Vorhandensein der Glasscheibe in einer zwei Ofenkammern trennenden Zone kontrolliert wird.

6. Verfahren nach Anspruch 5, dadurch gekennzeichnet, daß die temperatur der Glasscheibe mittels eines Strahlungspyrometers gemessen und die Heizleistung der nachfolgenden Kammern in Abhängigkeit von der gemessenen Temperatur geregelt wird.

7. Verfahren nach Anspruch 6, dadurch gekennzeichnet, daß ein Strahlungspyrometer mit verhältnismäßig kleinem Meßfleck verwendet wird, welcher auf eine Öffnung in der gegenüberliegenden Ofenwand gerichtet ist.

8. Verfahren nach einem der Ansprüche 5 bis 7, dadurch gekennzeichnet, daß das Vorhandensein der Glasscheibe wenigstens im Übergangsbereich zwischen der ersten und der zweiten Ofenkammer kontrolliert wird, wobei gegebenenfalls eine Temperatur gemessen wird.

9. Verfahren nach einem der Ansprüche 6 bis 8, dadurch gekennzeichnet, daß die Temperatur der Glasscheibe in mehreren vertikal übereinander angeordneten Zonen mittels mehreren übereinander angeordneten Strahlungspyrometern gemessen wird, und daß die Heizleistung in den aufeinanderfolgenden Ofenkammern in der Position der Strahlungspyrometer entsprechenden Zonen in Abhängigkeit von den gemessenen Temperaturen separat geregelt wird.

10. Verfahren nach einem der Ansprüche 1 bis 9, dadurch gekennzeichnet, daß die Regelung der Heizleistung in den Kammern, welche hinter der dem Meßinstrument folgenden Kammer angeordnet sind, mit Hilfe eines Speicherregisters erfolgt, welches eine zeitliche Verzögerung der Regelung bis zum Erreichen dieser Kammer hervorruft.

11. Verfahren nach einem der Ansprüche 1 bis 10, dadurch gekennzeichnet, daß die von den Meßinstrumenten gegebenen Impulse mit den theoretischen Signalen des Ofentakts verglichen werden, und daß das Heizprogramm aller Ofenkammern bei einer Abweichung vom Sollwert der Taktzeit, beispielsweise bei einer Störung der Transporteinrichtung, beeinflußt wird.

12. Verfahren nach einem der Ansprüche 1 bis 11, dadurch gekennzeichnet, daß die Temperatur der Glasscheiben am Auslaß des Ofens erneut mittels eines Strahlungspyrometers gemessen wird, und daß dieser Meßwert für die globale Regelung der Heizleistung des Ofens verwendet wird.

13. Verfahren nach Anspruch 12, dadurch gekennzeichnet, daß die Temperatur der nach dem Biegen am Auslaß des Ofens vorgespannten Glasscheibe vor Eintritt in die Vorspannstation, d.h. nach dem Biegen, gemessen wird.

14. Verfahren nach einem der Ansprüche 1 bis 13, dadurch gekennzeichnet, daß die von den verschiedenen Meßinstrumenten erhaltenen Signale in einen für die Beheizung des Ofens programmierten Mikroprozessor eingegeben werden.

15. Verfahren nach Anspruch 14, dadurch gekennzeichnet, daß das Regelungsprogramm für die Temperatur den kumulierten Durchlauf der Glasscheiben berücksichtigt, wobei die Heizleistung im Augenblick des Anlaufens des Ofens höher als im Normalbetrieb ist, um die Wärmeverluste beim Kontakt mit den kalten Teilen zu kompensieren.

16. Vorrichtung zur Durchführung des Verfahrens nach einem der vorhergehenden Ansprüche bei einem Ofen enthaltend mehrere hintereinander angeordnete Ofenkammern (I, II, III ...), Transportmittel (9, 10, 11, 12, 13), um die Glasscheiben (8) schrittweise von einer Kammer (I, II, III ...) zur anderen Kammer in einem vorbestimmten Arbeitstakt und aufgrund eines Programms zu fördern, mit in jeder Kammer angeordneten Heizelementen (17), deren Heizleistung durch Regler (47, 48) bestimmt ist, die durch Temperaturmeßsignale von Thermoelementen (38 ... 38) gesteuert sind, welche in den verschiedenen Kammern (I, II, III ...) gegenüber den Heizelementen (17) angeordnet sind, dadurch gekennzeichnet, daß mindestens ein optisches Pyrometer (24, 27) vor mindestens einer Kammer (II, III ...) in den die Kammer von der vorhergehenden Kammer (I, II ...) trennenden Zwischenraum gegenüber einer Öffnung (23, 26) in der Ofenwand angeordnet ist, wobei dieses optische Pyrometer (24, 27) mit dem Regler (47, 48) für die Heizleistung einer jeden Kammer (II, III ...) mittels eines Zählers (44), der mit einem Speicherregister (42) verbunden ist, und eines Proportionalreglers verbunden ist, welche eine Regelung proportional zu den von den Thermoelementen (30 ... 38) gegebenen Signalen bewirken, wenn das Vorhandensein einer Glasscheibe (8) durch den Zähler (54) und das Speicherregister (42) in dem durch das Programm bestimmten Moment bestätigt wird.

**Claims**

1. Method of regulating the temperature of a glass sheet in a furnace comprising a plurality of successive cells inside each of which the sheet, placed vertically, is moved at a predetermined rate from cell to cell to be heated to the temperature required for curving and/or tempering, while the heating power applied in each cell is regulated at a magnitude fixed, according to a preestablished programme, as a function of the wall temperature in the cell, characterised in that the presence of the glass sheet is detected in synchronism with its stepwise advance upstream of at least one of the cells of the furnace, the signal thus obtained serving to correct the regulation of the power supplied to the following cells.

2. Method according to claim 1, characterised by the use of a furnace having a rapid thermal response provided with heating elements having a rapid thermal response and insulating materials having a high insulating power and low thermal inertia.

3. Method according to claim 2, characterised by the use of heating elements incorporated wholly or partially in the surface of an insulating plate formed essentially of ceramic fibres having a specific gravity of about 200 Kg/m³.

4. Method according to claim 2 or 3, characterised in that the presence of the glass sheet is detected before entry thereof into the first cell of the furnace.

5. Method according to one of claims 2 to 4, characterised in that the presence of the glass sheet is detected in a zone separating two cells of the furnace.

6. Method according to claim 5, characterised in that detection is carried out by measurement of the temperature of the glass sheet, carried out by means of a radiation pyrometer, the measurement also being used to regulate the heating power for the following cells.

7. Method according to claim 6, characterised by use of a radiation pyrometer having a relatively narrow area of measurement, placed facing an opening in the opposite wall of the furnace.

8. Method according to one of claims 5 to 7, characterised in that the presence of the glass sheet is detected at least in the intermediate part between the first and second cell with possible measurement of its temperature.

9. Method according to one of claims 6 to 8, characterised in that the temperature of the glass sheet is measured in a plurality of vertically superposed zones by a plurality of radiation pyrometers arranged one above another and in that the heating power in the following cells is regulated separately, by zones corresponding to the position of the pyrometers, as a function of the temperatures measured.

10. Method according to one or more of claims 1 to 9, characterised in that regulation of the power in the cells situated downstream of that following the measuring instrument is carried out by means of a register providing during the regulation a delay corresponding to the time taken by the glass sheet to reach that cell.

11. Method according to one of claims 1 to 10, characterised in that the impulses produced by the measuring instruments are compared with the theoretical rate signals for the furnace, the heating programme for all the cells being modified in the case of departure from the actual rate, for example in the case of failure of a transport device.

12. Method according to one of claims 1 to 11, characterised in that at the output of the furnace the temperature of the glass sheet is again measured by a radiation pyrometer, this measurement serving as a parameter for overall regulation of the heating power of the furnace.

13. Method according to claim 12, characterised in that, the glass sheet being tempered after curving at the output of the furnace, its temperature is measured before entering the tempering station, that is to say before curving.

14. Method according to one of claims 1 to 13, characterised in that the signals provided by the various measuring instruments are fed to a microprocessor programmed for the heating of the furnace.

15. Method according to claim 14, characterised in that the programme for regulating the temperature takes account of the accumulated passages of glass sheets, the power at start-up of the furnace being higher than during normal running to compensate for loss of heat by contact with cold members.

16. Device for carrying out a method according to any one of the preceding claims in a vertically traversed furnace comprising a plurality of successive cells (I, II or III) having transport means (9, 10, 11, 12, 13) for moving the glass sheets (8) stepwise from one cell (I, II or III ...) to the next at a rate which is predetermined and recorded in a programme, also comprising in each cell heating members (17) of which the operation is determined by heating power regulators (47, 48) responsive to temperature measurement signals emitted by thermocouples (30 ... 38) positioned in the different cells (I, II, III ...) facing said heating members (17), characterised in that at least one optical pyrometer (24, 27) is positioned upstream of at least one cell (I, II) facing an opening (23, 26) in a wall of the furnace, this optical pyrometer (24, 27) being connected to a heating power regulator for each downstream cell (II, III ...) through a counter (54) associated with a register (42) and a proportional regulator (58) controlling an action proportional to the signals emitted by the thermocouples (30 ... 38) when the presence of a glass sheet (8) is confirmed by the counter (54) and the register (42) at a moment determined by the pre-established programme.

_Fig. 1_

0 047 682

*Fig. 2*

Fig.3